# EUROPÄISCHE PATENTSCHRIFT

(11) **EP 1 285 827 B1**
(45) Veröffentlichungstag und Bekanntmachung des Hinweises auf die Patenterteilung: **11.01.2006**
(21) Anmeldenummer: 02016812.6
(22) Anmeldetag: 26.07.2002
(51) Int. Cl.: B60R 22/34

(54) **Gurtaufroller für einen Fahrzeugsicherheitsgurt**
Seat belt retractor for a vehicle seat belt
Rétracteur pour ceinture de sécurité de véhicule

(30) Priorität: 21.08.2001 DE 20113834 U
(43) Veröffentlichungstag der Anmeldung: 26.02.2003
(73) Patentinhaber: TRW Automotive GmbH, 73553 Alfdorf (DE)
(72) Erfinder: Wier, Franz, 73571 Göggingen (DE)
(74) Vertreter: Sties, Jochen

(56) Entgegenhaltungen:
- DE-A- 19 650 494
- DE-A- 19 927 427
- DE-U- 20 004 674
- US-A- 6 012 667
- US-B1- 6 250 579
- US-B1- 6 264 127

## Beschreibung

Die Erfindung betrifft einen Gurtaufroller für einen Fahrzeugsicherheitsgurt mit einer in einem Rahmen drehbar gelagerten Gurtspule, zwei Sperrscheiben zum Blockieren der Gurtspule, zwei Energieaufnahmeelementen, von denen jedes an einem axialen Ende drehfest mit einer Sperrscheibe und eines an einem axialen Ende drehfest mit der Gurtspule verbunden ist, und zwei Sperrklinken, die mit den Sperrscheiben zusammenwirken können.

Ein solcher Gurtaufroller ist aus der DE-A-200 04 674 bekannt. Die Energieaufnahmeelemente eines Gurtaufrollers dienen dazu, eine kontrollierte Rückdrehung der Gurtspule, also in Gurtbandabzugsrichtung, bei an sich blokkiertem Gurtaufroller zu ermöglichen, wenn hohe Kräfte auf den vom Gurtaufroller bereitgestellten Sicherheitsgurt wirken. Auf diese Weise wird eine Kraftbegrenzungsfunktion erzielt. Der mit einer Kraftbegrenzungsfunktion versehene Gurtaufroller ermöglicht eine kontrollierte Vorwärtsbewegung des Oberkörpers des Fahrzeuginsassen, die letztendlich durch eine plastische Verformung der Energieaufnahmeelemente erreicht wird. Den Oberbegriff des Anspruch 1 zeigt die DE-A-196 50 494.

Es wurden bereits verschiedene Konzepte vorgeschlagen, um die Gurtbandkraft, von der ab es zu der kontrollierten Rückdrehung der Gurtspule in Gurtbandabzugsrichtung kommt, zu beeinflussen. Auf diese Weise soll je nach Schwere des Unfalls oder dem Gewicht des zurückzuhaltenden Fahrzeuginsassen eine Anpassung der Gurtbandabzugskraft erreicht werden.-Eine.Möglichkeit, die Gurtbandkraft zu beeinflussen, besteht darin, eines der Energieaufnahmeelemente selektiv zu- oder abzuschalten. Dies soll auch dann zuverlässig funktionieren, wenn der Gurtaufroller gesperrt ist.

Die Aufgabe der Erfindung besteht darin, einen Gurtaufroller der eingangs genannten Art dahingehend weiterzubilden, daß die Gurtbandabzugskraft auch während der Sperrung der Gurtspule zuverlässig und mit geringem Aufwand verändert werden kann.

Zur Lösung dieser Aufgabe ist erfindungsgemäß ein Gurtaufroller vorgesehen, bei dem mindestens eine Sperrklinke in einer Ausgangsstellung durch ein Verbindungselement lösbar mit dem Rahmen verbunden ist. Mit dem Einsatz eines derartigen Gurtaufrollers ist es möglich, beispielsweise bei einem schweren Fahrzeuginsassen oder einem schweren Unfallverlauf, ein Energieaufnahmeelement mit einem großen Torsionswiderstand einzusetzen. Ist eine Anpassung beispielsweise während der Vorverlagerung eines leichteren Fahrzeuginsassen oder bei einem leichteren Unfallverlauf erforderlich, so kann das Verbindungselement durch ein Entriegelungselement so in eine Endstellung bewegt werden, daß die Sperrklinke vom Rahmen gelöst wird und Sperrklinke und Rahmen miteinander keine Verbindung mehr haben. Dadurch kommt ein zweites Energieaufnahmeelement in einer Weise zum Einsatz, daß der Torsionswiderstand so reduziert wird, daß er zu kleineren auf den Insassen wirkenden Rückhaltekräften führt.

Vorzugsweise ist vorgesehen, daß das Entriegelungselement durch ein Betätigungselement beaufschlagbar ist. Das Entriegelungselement ist ein einfaches mechanisches Bauteil, das auf das Verbindungselement sicher einwirken kann, wenn das Entriegelungselement durch das Betätigungselement beaufschlagt wird. Es ist so möglich, durch eine besonders einfache und robuste Weise die Sperrklinke vom Rahmen zu lösen und damit das zweite Energieaufnahmeelement so einzusetzen, daß sich eine geringere Gurtbandabzugskraft ergibt.

In einer weiteren vorteilhaften Ausführuhgsform ist vorgesehen, daß das Verbindungselement ein Lagerloch aufweist, in dem eine Achse gelagert ist; und die Sperrklinke einen Ausschnitt aufweist, durch den sie an der Achse schwenkbar gelagert ist. Wird nun das Verbindungselement durch das Entriegelungselement aus seiner Ursprungsposition entfernt, kann die Sperrklinke ihre Fixierposition auf der Achse verlassen. Hat der Ausschnitt in der Sperrklinke im wesentlichen die Form eines Langlochs und weist er eine Einschnürung auf, so kann die Achse ab einer definierten Kraft die Einschnürung überwinden, und die Sperrklinke wird freigegeben. Dies kann auch dadurch erreicht werden, daß der Ausschnitt in der Sperrklinke in einem Teilbereich von einem dünnen Wandelement abgedeckt wird. Bei einer festgelegten Kraft kann die Achse das Wandelement aufbrechen und die Sperrklinke ihre Fixierposition auf der Achse verlassen.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- Figur 1 eine teilgeschnittene Ansicht gemäß einer ersten Ausführungsform eines erfindungsgemäßen Gurtaufrollers;
- Figur 2 eine perspektivische Teil ansicht gemäß der ersten Ausführungsform des erfindungsgemäßen Gurtaufrollers;
- Figur 3 eine geschnittene Teilansicht gemäß der ersten Ausführungsform des erfindungsgemäßen Gurtaufrollers;
- Figur 4 eine weitere geschnittene Teilansicht gemäß der ersten Ausführungsform des erfindungsgemäßen Gurtaufrollers;
- Figur 5 eine teilgeschnittene Ansicht gemäß einer zweiten Ausführungsform des erfindungsgemäßen Gurtaufrollers und
- Figur 6 eine weitere perspektivische Teilansicht gemäß einer weiteren Ausführungsform des erfindungsgemäßen Gurtaufrollers.

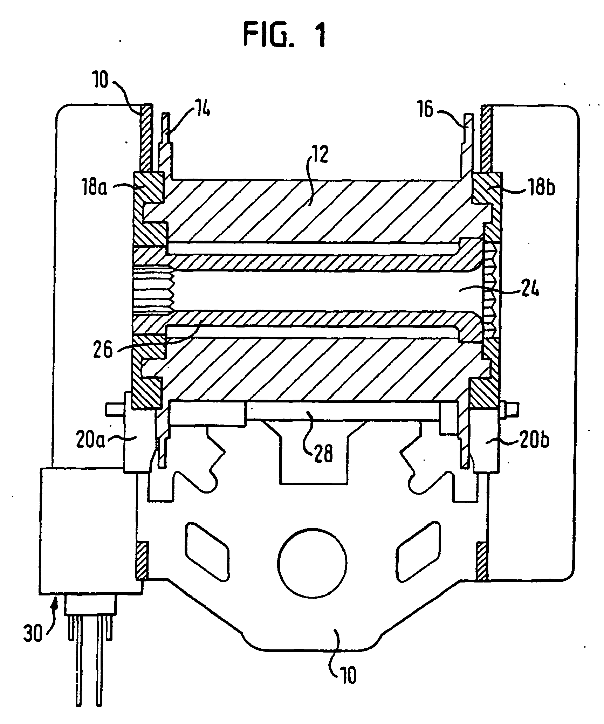

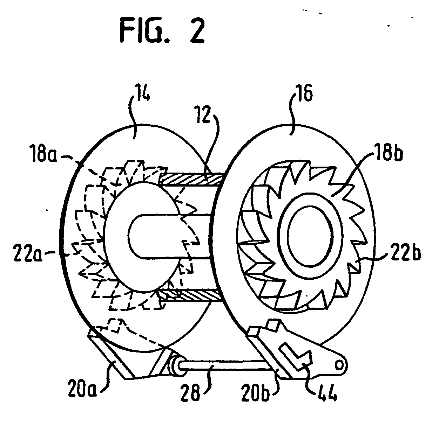

In Figur 1 ist ein Gurtaufroller gezeigt, der einen Rahmen 10 aufweist, in welchem eine Gurtspule 12 drehbar gelagert ist. Die Gurtspule 12 weist zwei Flansche 14, 16 auf, zwischen denen ein nicht dargestellter Sicherheitsgurt aufgewikkelt werden kann. Eine Sperrscheibe 18a befindet sich am bezüglich Figur 1 linken axialen Ende der Gurtspule 12. Eine zweite Sperrscheibe 18b befindet sich am bezüglich Figur 1 rechten axialen Ende der Gurtspule. Am Rahmen 10 sind zwei Sperrklinken 20a, 20b gelagert, die von einem (nicht dargestellten) herkömmlichen Sperrmechanismus in Sperrverzahnungen 22a, 22b (siehe Figur 2) eingesteuert werden können, die an den Sperrscheiben 18a, 18b ausgebildet sind.

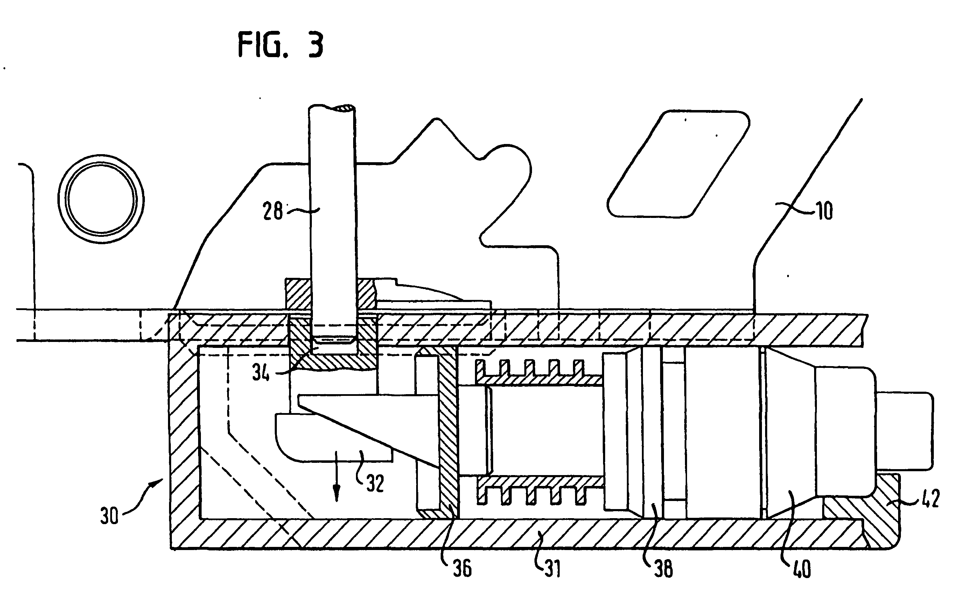

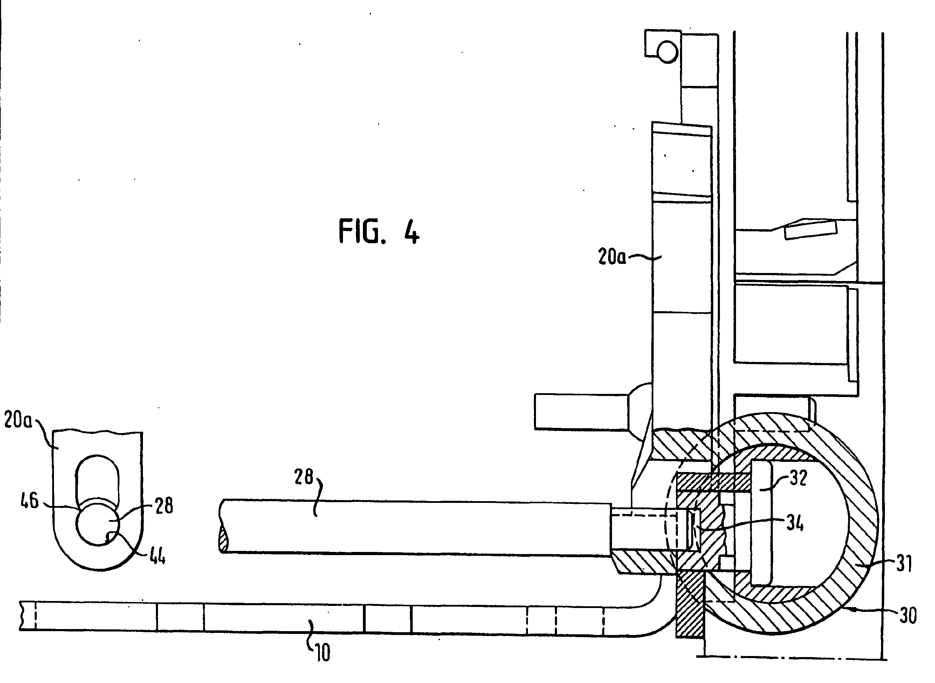

In der hier dargestellten Ausführungsform sind in platzsparender Weise im Inneren der Gurtspule 12 ein Torsionsstab 24 und ein diesen konzentrisch umgebendes Torsionsrohr 26 angeordnet, die beide als Energieaufnahmeelemente dienen. Der Torsionsstab 24 und das Torsionsrohr 26 sind an ihrem bezüglich Figur 1 linken axialen Ende drehfest mit der Sperrscheibe 18a verbunden. An ihrem bezüglich Figur 1 rechten axialen Ende ist der Torsionsstab 24 drehfest mit der Sperrscheibe 18b verbunden, und das Torsionsrohr 26 ist drehfest mit der Gurtspule 12 verbunden. Zur drehfesten Verbindung kann hier jeweils eine Entriegelungselementwellenverzahnung eingesetzt werden. Die beiden Sperrklinken 20a, 20b sind mittels einer Achse 28 drehfest miteinander verbunden. An dieser Achse 28 ist eine Entkopplungsvorrichtung 30 in einem in den Figuren 3 und 4 dargestellten Gehäuse 31 angeordnet. Die Entkopplungsvorrichtung 30 kann die Verbindung zwischen den Sperrklinken 20a und 20b lösen.

Der detaillierte Aufbau der Entkopplungsvorrichtung ist in den Figuren 3 und 4 zu sehen. Ein Verbindungselement 32 mit einem Lagerloch 34 ist so am Rahmen 10 angeordnet, daß die die Sperrklinken 20a und 20b verbindende Achse 28 in das Lagerloch eingreift. An dem Verbindungselement 32 ist ein Entriegelungselement 36 angeordnet, das in der hier dargestellten Ausführungsform von einem an einem Betätigungselement 40 sitzenden Kolben 38 beaufschlagbar ist. Dies erlaubt eine besonders einfache und sichere Art der Kraftübertragung vom Betätigungselement 40 auf das Entriegelungselement 36. Das Betätigungselement 40 ist in dem bezüglich Figur 3 rechten Ende des Gehäuses 31, das durch einen Stopfen 42 abgeschlossen wird, angeordnet.

Die Sperrklinke 20a weist einen Ausschnitt 44 auf, durch den sie an der Achse 28 schwenkbar gelagert ist. Dieser Ausschnitt hat in der hier dargestellten Ausführungsform im wesentlichen die Form eines Langlochs und weist eine Einschnürung 46 auf. Das Verbindungselement 32 greift so in den bezüglich Figur 4 oberen Teil des Ausschnitts 44 ein, daß die Achse 28 sicher in dem bezüglich Figur 4 unteren Teil des Ausschnitts 44 drehbar gelagert ist. In einer alternativen Ausführungsform kann in dem bezüglich Figur 4 oberen Teil des Ausschnitts 44 ein dünnes Wandelement angeordnet sein, das anstelle der Einschnürung die Achse 28 bezüglich der Sperrklinke fixiert.

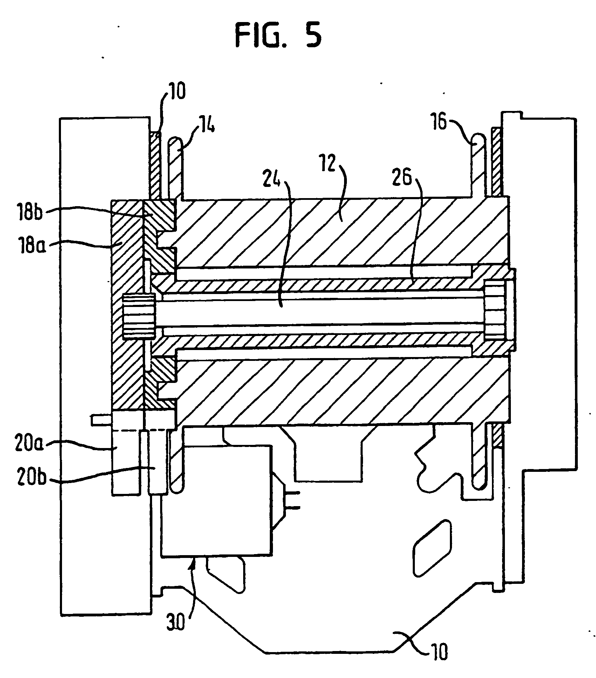

In Figur 5 ist der Gurtaufroller in einer weiteren bevorzugten Ausführungsform dargestellt, bei der die beiden Sperrscheiben 18a, 18b an dem bezüglich Figur 5 linken axialen Ende der Gurtspule 12 angeordnet und jeweils drehfest mit Torsionsstab 24 bzw. Torsionsrohr 26 verbunden sind. An dem bezüglich Figur 5 rechten axialen Ende sind der Torsionsstab 24 und das Torsionsrohr 26 drehfest mit der Gurtspule 12 verbunden. Auch hier ist eine Entkopplungsvorrichtung 30 so angeordnet, daß sie die Verbindung zwischen den Sperrklinken 20a und 20b lösen kann.

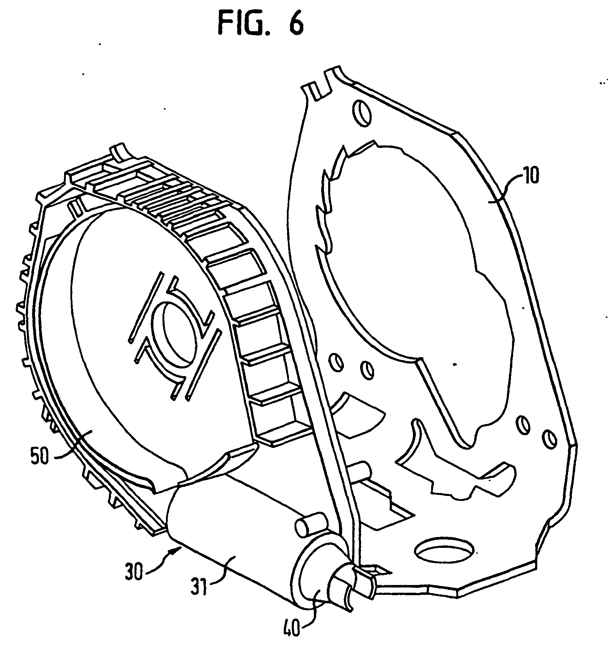

Das Betätigungselement 40 ist vorzugsweise eine pyrotechnische Einrichtung, durch die eine besonders preisgünstige und sichere Auslösung möglich ist. Wegen des für den Auslösevorgang erforderlichen geringen Energiebetrags kann die pyrotechnische Einrichtung ohne Boosterladung verwendet werden. Vorzugsweise ist das Gehäuse 31 einstückig mit einer Federkasette 50 verbunden (Figur 6), was zu einer Reduzierung der Bauteile und damit der Montagekosten führt. Wegen der geringen freigesetzten Energie kann das Gehäuse 31 auch aus einem kostengünstigen Kunststoff oder Metall bestehen. Das Betätigungselement 40 läßt sich durch einfache, kostengünstige Mittel, vorteilhafterweise durch ein Klebemittel oder eine Verschweißung, z.B. durch Ultraschall, mit dem Gehäuse 31 verbinden.

Die Funktion des beschriebenen Gurtaufrollers kann in folgender Weise dargestellt werden:

Im Normalfall, wenn auf den Gurtaufroller keine übermäßig großen Verzögerungen einwirken und das Gurtband nicht mit großer Beschleunigung von der Gurtspule abgezogen wird, befinden sich die Sperrklinken 20a und 20b in einer Position, in der sie nicht in die Sperrscheiben 18a und 18b eingreifen. Die Gurtspule ist frei drehbar, und das Gurtband kann von ihr frei abgezogen oder auch aufgewickelt werden.

Für den Fall der Aktivierung der Auslösevorrichtung soll zunächst der Gurtaufroller mit den zweiseitig angeordneten Sperrklinken und Sperrscheiben betrachtet werden (Figur 1). Werden die Sperrklinken 20a und 20b durch den fahrzeugsensitiven Sensor oder den gurtbandsensitiven Sensor ausgelöst, so greifen sie in die Sperrscheiben 18a und 18b ein. Der Torsionsstab 24 ist dann beidseitig blockiert, während das Torsionsrohr 26 gegen eine Drehung in der Gurtbandabwickelrichtung einseitig blockiert ist. Somit ist eine Drehung der Gurtspule in Gurtbandabwickelrichtung nur möglich, wenn das Torsionsrohr 26 tordiert wird.

Abhängig von verschiedenen Einflußfaktoren, wie der Unfallschwere, der Größe oder dem Gewicht des Fahrzeuginsassen, kann der Torsionswiderstand des Torsionsrohrs 26 und die damit auf den Insassen wirkende Rückhaltekraft zu groß sein. In diesem Fall wird das Betätigungselements 40 ausgelöst und dadurch der Kolben 38 so verschoben, daß er auf das Entriegelungselement 36 einwirken kann (siehe Figuren 3 und 4). Deas Entriegelungselement 36 bewegt das Verbindungselement 32 so weit, daß es nicht mehr in den bezüglich Figur 4 oberen Teil des Ausschnitts 44 eingreift und daß die Achse 28 nicht mehr vom Lagerloch 34, sondern nur noch vom Rahmen 10 gehalten wird. Die Achse 28 kann nun deshalb bei einer definierten Kraft die Einschnürung 46 des Ausschnitts 44 in der Sperrklinke 20a überwinden. Dadurch verläßt die Sperrklinke 20a ihre Fixierposition auf der Achse 28 und kann ihre Sperrfunktion nicht mehr erfüllen. Durch die Verschaltung von Torsionsrohr 26 und Torsionsstab 24 wird nun ein kleinerer Torsionswiderstand erreicht, was in einer Reduzierung der der Drehung der Gurtspule 12 in Gurtbandabwickelrichtung entgegenwirkenden Kraft resultiert.

In einer weiteren bevorzugten Ausführungsform sind die Sperrscheiben 18a, 18b und die Sperrklinken 20a, 20b auf einer Seite der Gurtspule angeordnet und die beiden Energieaufnahmeelemente Torsionsrohr 26 und Torsionsstab 24 sind parallel geschaltet (Figur 5). Diese Ausführungsform hat den Vorteil, daß hier drei Kraftbegrenzerniveaus zur Verfügung stehen. Werden beide Sperrklinken 20a, 20b in die Sperrverzahnung 22a, 22b der Sperrscheiben 18a, 18b eingesteuert, so wirken zunächst die beiden Energieaufnahmeelemente Torsionsrohr 26 und Torsionsstab 24 parallel, und die Torsionswiderstände der beiden Energieaufnahmeelemente Torsionsrohr 26 und Torsionsstab 24 addieren sich. Soll im Falle eines leichten Fahrzeuginsassen oder eines weniger schweren Unfalls nur ein Energieaufnahmeelement zur Verfügung stehen, so kann auch hier durch die beschriebene Entkopplungsvorrichtung 30 eine der Sperrklinken 20a, 20b so aus ihrer Fixierposition bewegt werden, daß sie die Einschnürung 46 überwindet (siehe Figur 4) und so ihre Sperrfunktion verliert. Die einer Drehung der Gurtspule in Gurtbandabwickelrichtung entgegenwirkende Kraft resultiert nun allein aus dem Torsionswiderstandsmoment eines der beiden Energieaufnahmeelemente Torsionsrohr 26 und Torsionsstab 24. Sind die Torsionswiderstandsmomente von Torsionsrohr 26 und Torsionsstab 24 unterschiedlich groß, so können hier noch einmal zwei weitere Niveaus für die Gurtbandabzugskraft realisiert werden.

Das Betätigungselement kann auch eine elektrische, elektromagnetische oder hydraulische Einrichtung sein.

## Patentansprüche

1. Gurtaufroller für einen Fahrzeugsicherheitsgurt mit einer in einem Rahmen (10) drehbar gelagerten Gurtspule (12), zwei Sperrscheiben (18a, 18b) zum Blockieren der Gurtspule, zwei Energieaufnahmeelementen (24, 26), von denen jedes an einem axialen Ende mit einer Sperrscheibe und eines (26) an einem axialen Ende drehfest mit der Gurtspule verbunden ist, und zwei Sperrklinken (20a, 20b), die mit den Sperrscheiben zusammenwirken können, wobei mindestens eine Sperrklinke durch ein Verbindungselement (32) lösbar mit dem Rahmen verbunden ist, **dadurch gekennzeichnet, daß** jedes Energieaufnahmeelement (24, 26) an einem axialen Ende drehfest mit einer Sperrscheibe (18a, 18b) verbunden ist.

2. Gurtaufroller nach Anspruch 1, **dadurch gekennzeichnet, daß** das Verbindungselement (32) durch ein Entriegelungselement (36) derart von der Ausgangsstellung in eine Endstellung bewegbar ist, daß mindestens eine Sperrklinke und der Rahmen (10) in der Endstellung keine Verbindung miteinander aufweisen.

3. Gurtaufroller nach Anspruch 2, **dadurch gekennzeichnet, daß** das Entriegelungselement (36) durch ein Betätigungselement (40) beaufschlagbar ist.

4. Gurtaufroller nach Anspruch 3, **dadurch gekennzeichnet, daß** das Betätigungselement (40) einen Kolbenabschnitt (38) aufweist, der auf das Entriegelungselement (36) einwirken kann.

5. Gurtaufroller nach Anspruch 3 oder 4, **dadurch gekennzeichnet, daß** das Betätigungselement (40) eine pyrotechnische Einrichtung ist.

6. Gurtaufroller nach einem der Ansprüche 3 bis 5, **dadurch gekennzeichnet, daß** das Betätigungselement (40) in ein Gehäuse (31) eingebettet ist.

7. Gurtaufroller nach Anspruch 6, **dadurch gekennzeichnet, daß** das Gehäuse (31) einstückig mit einer Federkassette (50) verbunden ist.

8. Gurtaufroller nach Anspruch 6 oder 7, **dadurch gekennzeichnet, daß** das Gehäuse (31) aus einem Kunststoff ausgeführt ist.

9. Gurtaufroller nach Anspruch 6 oder 7, **dadurch gekennzeichnet, daß** das Gehäuse (31) aus einem Metall ausgeführt ist.

10. Gurtaufroller nach einem der Ansprüche 6 bis 9, **dadurch gekennzeichnet, daß** das Betätigungselement (40) und das Gehäuse (31) durch ein Klebemittel miteinander verbunden sind.

11. Gurtaufroller nach einem der Ansprüche 6 bis 9, **dadurch gekennzeichnet, daß** das Betätigungselement (40) und das Gehäuse (31) über eine Schweißstelle miteinander verbunden sind.

12. Gurtaufroller nach einem der vorhergehenden Ansprüche, **dadurch gekennzeichnet, daß** das Verbindungselement (32) ein Lagerloch (34) aufweist, in dem eine Achse (28) gelagert ist, und die Sperrklinke (18a, 18b) einen Ausschnitt (44) aufweist, durch den sie an der Achse schwenkbar gelagert ist.

13. Gurtaufroller nach Anspruch 12, **dadurch gekennzeichnet, daß** der Ausschnitt in der Sperrklinke (18a, 18b) im wesentlichen die Form eines Langlochs hat und eine Einschnürung (46) aufweist.

14. Gurtaufroller nach Anspruch 12, **dadurch gekennzeichnet, daß** der Ausschnitt (44) in der Sperrklinke in einem Teilbereich von einem dünnem Wandelement abgedeckt wird.

15. Gurtaufroller nach einem der vorhergehenden Ansprüche, **dadurch gekennzeichnet, daß** die zwei Energieaufnahmeelemente (24, 26) im Innern der Gurtspule (12) angeordnet sind.

16. Gurtaufroller nach einem der vorhergehenden Ansprüche, **dadurch gekennzeichnet, daß** das erste Energieaufnahmeelement ein Torsionsstab (24) und das zweite Energieaufnahmeelement ein Torsionsrohr (26) ist.

17. Gurtaufroller nach einem der vorhergehenden Ansprüche, **dadurch gekennzeichnet, daß** die Sperrscheiben (18a, 18b) an den beiden entgegengesetzten axialen Enden der Gurtspule (12) angeordnet sind.

18. Gurtaufroller nach einem der vorhergehenden Ansprüche, **dadurch gekennzeichnet, daß** die Sperrscheiben (18a, 18b) zusammen an einem der axialen Enden der Gurtspule (12) angeordnet sind.

## Claims

1. A belt retractor for a vehicular seat belt, comprising a belt reel (12) rotatably mounted in a frame (10), two locking discs (18a, 18b) for blocking the belt reel, two energy absorbing elements (24, 26), each of which is connected at an axial end to a locking disc and one (26) of which is connected at an axial end to the belt reel for joint rotation therewith, and two locking pawls (20a, 20b) that are adapted to cooperate with the locking discs, at least one locking pawl being releasably connected to the frame by a connecting element (32), **characterized in that** each energy absorbing element (24, 26) is connected at an axial end to a locking disc (18a, 18b) for joint rotation therewith.

2. The belt retractor as set forth in claim 1, **characterized in that** the connecting element (32) is movable from the starting position into an end position by an unlocking element (36) such that at least one locking pawl and the frame (10) have no connection with each other in the end position.

3. The belt retractor as set forth in claim 2, **characterized in that** the unlocking element (36) can be acted upon by an actuating element (40).

4. The belt retractor as set forth in claim 3, **characterized in that** the actuating element (40) includes a piston section (38) which can act on the unlocking element (36).

5. The belt retractor as set forth in claim 3 or 4, **characterized in that** the actuating element (40) is a pyrotechnical device.

6. The belt retractor as set forth in any of claims 3 to 5, **characterized in that** the actuating element (40) is embedded in a housing (31).

7. The belt retractor as set forth in claim 6, **characterized in that** the housing (31) is integrally connected to a spring cassette (50).

8. The belt retractor as set forth in claim 6 or 7, **characterized in that** the housing (31) is made of a plastics material.

9. The belt retractor as set forth in claim 6 or 7, **characterized in that** the housing (31) is made of a metal.

10. The belt retractor as set forth in any of claims 6 to 9, **characterized in that** the actuating element (40) and the housing (31) are connected to each other by an adhesive.

11. The belt retractor as set forth in any of claims 6 to 9, **characterized in that** the actuating element (40) and the housing (31) are connected to each other by a weld spot.

12. The belt retractor as set forth in any of the preceding claims, **characterized in that** the connecting element (32) has a mounting hole (34) in which a spindle (28) is mounted, and the locking pawl (20a, 20b) has an aperture (44) by which it is pivotally mounted at the spindle.

13. The belt retractor as set forth in claim 12, **characterized in that** the aperture in the locking pawl (20a, 20b) has substantially the shape of an elongated hole and includes a constriction (46).

14. The belt retractor as set forth in claim 12, **characterized in that** the aperture (44) in the locking pawl is covered in a partial area by a thin wall element.

15. The belt retractor as set forth in any of the preceding claims, **characterized in that** the two energy absorbing elements (24, 26) are arranged inside the belt reel (12).

16. The belt retractor as set forth in any of the preceding claims, **characterized in that** the first energy absorbing element is a torsion bar (24) and the second energy absorbing element is a torsion tube (26).

17. The belt retractor as set forth in any of the preceding claims, **characterized in that** the locking discs (18a, 18b) are arranged at the two opposite axial ends of the belt reel (12).

18. The belt retractor as set forth in any of the preceding claims, **characterized in that** the locking discs (18a, 18b) are jointly arranged at one of the axial ends of the belt reel (12).

## Revendications

1. Enrouleur de ceinture pour une ceinture de sécurité de véhicule, comportant une bobine de ceinture (12) montée rotative dans un cadre (10), deux poulies de blocage (18a, 18b) pour bloquer la bobine de ceinture, deux éléments de réception d'énergie (24, 26) dont chacun est relié, à une extrémité axiale, en rotation avec une poulie de blocage, et dont un (26) est relié, à une extrémité axiale, de manière solidaire en rotation avec la bobine de ceinture, et comportant deux cliquets de blocage (20a, 20b) qui peuvent coopérer avec les poulies de blocage, au moins un cliquet de blocage étant relié de manière détachable avec le cadre par un élément de liaison (32), **caractérisé en ce que** chaque élément de réception d'énergie (24, 26) est relié à une extrémité axiale de manière solidaire en rotation avec une poulie de blocage (18a, 18b).

2. Enrouleur de ceinture selon la revendication 1, **caractérisé en ce que** l'élément de liaison (32) peut être déplacé par un élément de déverrouillage (36) depuis la position initiale jusque dans une position terminale de telle sorte qu'au moins un cliquet de blocage et le cadre (10) ne présentent aucune liaison l'un avec l'autre dans la position terminale.

3. Enrouleur de ceinture selon la revendication 2, **caractérisé en ce que** l'élément de déverrouillage (36) peut être sollicité par un élément d'actionnement (40).

4. Enrouleur de ceinture selon la revendication 3, **caractérisé en ce que** l'élément d'actionnement (40) présente un tronçon de piston (38) qui peut agir sur l'élément de déverrouillage (36).

5. Enrouleur de ceinture selon la revendication 3 ou 4, **caractérisé en ce que** l'élément d'actionnement (40) est un dispositif pyrotechnique.

6. Enrouleur de ceinture selon l'une des revendications 3 à 5, **caractérisé en ce que** l'élément d'actionnement (40) est logé dans un boîtier (31).

7. Enrouleur de ceinture selon la revendication 6, **caractérisé en ce que** le boîtier (31) est relié d'un seul tenant avec une cassette à ressort (50).

8. Enrouleur de ceinture selon la revendication 6 ou 7, **caractérisé en ce que** le boîtier (31) est réalisé en matière plastique.

9. Enrouleur de ceinture selon la revendication 6 ou 7, **caractérisé en ce que** le boîtier (31) est réalisé en métal.

10. Enrouleur de ceinture selon l'une des revendications 6 à 9, **caractérisé en ce que** l'élément d'actionnement (40) et le boîtier (31) sont reliés l'un à l'autre par une colle.

11. Enrouleur de ceinture selon l'une des revendications 6 à 9, **caractérisé en ce que** l'élément d'actionnement (40) et le boîtier (31) sont reliés l'un à l'autre par un point de soudure.

12. Enrouleur de ceinture selon l'une des revendications précédentes, **caractérisé en ce que** l'élément de liaison (32) présente un trou de montage (34) dans lequel est monté un axe (28), et le cliquet de blocage (20a, 20b) présente une découpe (44) à travers laquelle il est monté à pivotement sur l'axe.

13. Enrouleur de ceinture selon la revendication 12, **caractérisé en ce que** la découpe dans le cliquet de blocage (20a, 20b) a sensiblement la forme d'un trou oblong et présente un étranglement (46).

14. Enrouleur de ceinture selon la revendication 12, **caractérisé en ce que** la découpe (44) dans le cliquet de blocage est couvert dans une zone partielle par un élément de paroi mince.

15. Enrouleur de ceinture selon l'une des revendications précédentes, **caractérisé en ce que** les deux élément de réception d'énergie (24, 26) sont agencés à l'intérieur de la bobine de ceinture (12).

16. Enrouleur de ceinture selon l'une des revendications précédentes, **caractérisé en ce que** le premier élément de réception d'énergie est une barre de torsion (24) et le deuxième élément de réception d'énergie est un tube de torsion (26).

17. Enrouleur de ceinture selon l'une des revendications précédentes, **caractérisé en ce que** les poulies de blocage (18a, 18b) sont agencées aux deux extrémités axiales opposées de la bobine de ceinture (12).

18. Enrouleur de ceinture selon l'une des revendications précédentes, **caractérisé en ce que** les poulies de blocage (18a, 18b) sont agencées ensemble à une des extrémités axiales de la bobine de ceinture (12).
